# EUROPÄISCHE PATENTSCHRIFT

(11) **EP 2 730 789 B1**
(45) Veröffentlichungstag und Bekanntmachung des Hinweises auf die Patenterteilung: **01.03.2017**
(21) Anmeldenummer: 13005151.9
(22) Anmeldetag: 30.10.2013
(51) Int. Cl.: F15B 21/08, H02K 35/02, F01B 25/00

(54) **Elektropneumatisches Feldgerät**
Electro-pneumatic field device
Appareil de terrain électropneumatique

(30) Priorität: 07.11.2012 DE 202012010675 U
(43) Veröffentlichungstag der Anmeldung: 14.05.2014
(73) Patentinhaber: Samson Aktiengesellschaft, 60314 Frankfurt (DE)
(72) Erfinder: Kolbenschlag, Stefan, 64291 Darmstadt (DE); Weigand, Christof, 61440 Oberursel (DE)
(74) Vertreter: Schmid, Nils T.F.

(56) Entgegenhaltungen:
- EP-A1- 2 466 175
- EP-A2- 1 071 195

## Beschreibung

Die Erfindung betrifft ein elektropneumatisches Feldgerät, wie einen elektropneumatischen Umformer oder einen elektropneumatischen Stellungsregler, zum Ansteuern eines pneumatischen Stellantriebs. Der Stellantrieb kann beispielsweise einen Prozessstrom einer prozesstechnischen Anlage, wie einer Raffinerieanlage, einer Chemieanlage oder einer Anlage der Fabrikautomation, einstellen, insbesondere regeln.

Ein elektropneumatisches Feldgerät gemäß dem Oberbegriff von Anspruch 1 ist aus DE 10 2010 054 878 A1 bekannt. Das pneumatische Feldgerät umfasst einen Energiewandler, der pneumatische Energie in elektrische Energie umwandelt. Dafür hat der Energiewandler einen Schwingdauermagneten, der als Läufer bei einer Hin- und Herbewegung eine elektrische Abgabespannung in einer Spule induziert. Die Bewegung wird mittels eines Druckluftimpulses initiiert, wobei eine Rückstellung mittels eines Dauermagneten in der Rückstellkammer realisiert ist. Der Läufer umfasst eine Hülse, an deren von der Druckarbeitskammer abgewandten Seite ein Dauermagnet angeordnet ist. An den Zylindergleitwandbereichen ist ein Druckluftzugang vorgesehen, der bei Übereinstimmung einer Zuluftöffnung in der Läuferhülse eine Druckluftbeaufschlagung der Arbeitskammer zulässt, wodurch der Magnetläufer in eine Richtung getrieben wird. Vor allem bei längeren Stillstandzeiten zeigte sich, dass ein Initiieren der Hin- und Herbewegung des Läufers auch aufgrund erhöhter Haftreibungskräfte erschwert war. Auch ergaben sich Schwierigkeiten bei der Dichtigkeit des Läufers relativ zur Zylinderkammer, wobei eine Dichtigkeit nur sowohl an dem Druckluftzugang sowie der Zugangsöffnung als auch längs der Läuferflächen relevant ist.

EP 1 071 195 A2 beschreibt einen pneumatisch betriebenen Stromgenerator.

Es ist Aufgabe der Erfindung, die Nachteile des Stands der Technik zu überwinden, insbesondere ein elektropneumatisches Feldgerät mit einem Energiewandler zu verbessern, bei dem mittels Druckluftimpuls ein Läufermagnet hin und her zu bewegen ist, wobei eine sichere Funktionsweise selbst bei längeren Stillstandzeiten gewährleistet sein soll und insbesondere Druckluftverluste innerhalb der Arbeitskammer soweit als möglich zu vermeiden sind.

Diese Aufgabe wird durch die Merkmale von Anspruch 1 gelöst. Danach ist ein elektropneumatisches Feldgerät, wie ein elektropneumatischer Umformer oder eine elektropneumatischer Stellungsregler, vorgesehen, der einen pneumatischen Stellantrieb ansteuern soll. Der pneumatische Stellantrieb stellt oder regelt einen Prozessstrom einer prozesstechnischen Anlage, indem ihm ein pneumatisches Stellsignal von dem elektropneumatischen Feldgerät zugeführt wird. Das pneumatische Stellsignal wird mittels eines elektrischen Stellsignals durch das elektropneumatische Feldgerät erzeugt. Das erfindungsgemäße elektropneumatische Feldgerät umfasst einen Energiewandler, der anhand der vorhandenen Pneumatik, insbesondere anhand einer insbesondere konstanten pneumatischen Energiequelle zum Betreiben des Stellantriebs, elektrische Energie bereitstellt, die schließlich dazu verwendet werden soll, selbst das elektropneumatische Feldgerät mit elektrischer Energie zu versorgen und zu betreiben. Vorzugsweise wird ausschließlich die umgewandelte elektrische Energie dazu verwendet, das erfindungsgemäße elektropneumatische Feldgerät zu betreiben. Weitere elektrische Energieversorger sind vorzugsweise obsolet. Der Energiewandler umfasst eine Arbeitskammer, in die ein pneumatischer Druckluftzugang mündet. Über den pneumatischen Druckluftzugang ist ein Druckluftimpuls in Form einer Druckluftströmung insbesondere taktweise in die Arbeitskammer einleitbar. Neben der Arbeitskammer hat der Energiewandler eine Rückstellkammer, eine Spule und einen die Arbeitskammer und die Rückstellkammer trennenden Läufer oder Kolbenläufer. Der Läufer ist für eine translatorische Hin- und Herbewegung bei entsprechender Vergrößerung bzw. Verkleinerung der Arbeitskammer bzw. der Rückstellkammer geführt und mit oder als Dauermagnet ausgebildet, so dass bei der Hin- und Herbewegung elektrische Spannung in der Spule induziert wird. Die Spule kann außerhalb der Rückstellkammer und/oder der Arbeitskammer oder innerhalb einer Begrenzungswand der betreffenden Kammer angeordnet sein. Die Spule ist derart zum magnetischen Läufer anzuordnen, dass die gewünschte Spannung in der Spule während der Läuferbewegung induziert ist. Die Spule erstreckt sich im Wesentlichen längs der gesamten Bewegungsamplitude des Läufers. In der Rückstellkammer kann beispielsweise eine Rückstellfeder oder ein Dauermagnet angeordnet sein, um für die Hin- und Herbewegung Rückstellkräfte auf den Läufer wirken zu lassen. Erfindungsgemäß ist der pneumatische Druckluftzugang derart ausgestaltet, dass der den Druckluftzugang verlassende Druckluftimpuls die Arbeitskammer mit einer Richtungskomponente erreicht, die parallel zur translatorischen Bewegungsrichtung des Läufers ist und insbesondere auf den Läufer zu gerichtet ist, damit die Druckluftimpulsströmung nach Eintritt in die Arbeitskammer gegen den Läufer trifft. Beim Öffnen des Druckluftzugangs, wodurch der Eintritt des Druckluftimpulses in die Arbeitskammer einhergeht, wird für die Hin- und Herbewegung nicht nur der pneumatische Druck in der Arbeitskammer erhöht, sondern auch Druckimpulskräfte dem Läufer mitgeteilt, um unterstützend diesen aus seiner Ruhestellung zum Ausführen der Hin- und Herbewegung in Bewegung zu setzen. Auf diese Weise werden die an dem geführten Läufer wirkenden Haftreibungskräfte leichter überwunden und der Energieerzeugungsprozess in dem Energiewandler kann funktionssicher einsetzen. Solange der Druckluftzugang offen ist, wirkt der Druckluftimpuls auf den Läufer, um ihn in eine distale Umkehrposition zu drücken. In der distalen Umkehrposition sind die Rückstellkräfte, die innerhalb der Rückstellkammer erzeugt sind, am höchsten und derart hoch, dass die Bewegung des Läufers umgekehrt wird und der Läufer zurück in die proximale Umkehrposition gedrängt wird. Währenddessen ist der Druckluftzugang geschlossen. Bei der Hin- und Herbewegung wird elektrische Spannung in der dem Läufer benachbarten Spule induziert. Mit der Ausrichtung des die Arbeitskammer erreichenden Druckluftimpulses in Bewegungsrichtung des Läufers besteht die Möglichkeit, den Druckluftzugang von Gleitbereichen zwischen dem Läufer und der Läuferführung entfernt anzuordnen, so dass Dichtigkeitsschwierigkeiten beim die Kammern trennenden Läufer beseitigt sind.

Bei einer bevorzugten Ausführung der Erfindung ist ein Anteil der mit der axialen Bewegungsrichtung zusammenfallenden Richtungskomponente der Einströmrichtung des Druckluftimpulses im Vergleich zu der jeweiligen weiteren radialen Richtungskomponente der Einströmungsrichtung größer als 20%. Vorzugsweise überwiegt die axiale Richtungskomponente der Einströmrichtung gegenüber den radialen Richtungskomponenten der Einströmrichtung, so dass insbesondere der Läufer während des gesamten Öffnungszeitraums des Druckluftzugangs mit dem Druckluftimpuls beaufschlagt ist.

Bei einer Weiterbildung der Erfindung hat der Läufer im Wesentlichen eine in Bewegungsrichtung erstreckende axiale, insbesondere zylindrische Führungsaußenseite, die für die geführte Hin- und Herbewegung mit einer insbesondere zylindrischen Führungsinnenseite der Kammer zusammenwirkt. Des Weiteren hat der Läufer wenigstens eine axiale Stirnseite, die als pneumatische Wirkfläche fungiert und dem Druckluftzugang zugewandt ist und auf die der Druckimpuls nach Eintritt in die Arbeitskammer trifft. Dabei stellt die Stirnseite das erste Strömungshindernis für den Strömimpuls dar, nachdem er in die Arbeitskammer gelangt ist. Bei einer bevorzugten Ausführung der Erfindung hat die Arbeitskammer eine insbesondere zylindrische Längswand, längs der der Läufer bei dessen Hin- und Herbewegung entlang gleitet und geführt ist, und eine quer, insbesondere senkrecht, zur Bewegungsrichtung verlaufende Stirnwand. Die Stirnwand liegt dem Läufer sowie der Rückstellkammer diametral gegenüber. Die Längswand ist zumindest längs des Gleitwegs des Läufers frei von jeglichem Druckluftzugang ausgeführt, so dass der Läufer im Verlauf der Hin- und Herbewegung den Druckluftzugang weder verschließen noch freigeben kann, sondern unbeeinflusst lässt. Vorzugsweise ist der Druckluftzugang in der Stirnwand der Arbeitskammer eingebracht. Dabei kann der Druckluftzugang im Zentrum der Stirnwand liegen.

Bei einer bevorzugten Ausführung der Erfindung umfasst der Druckluftzugang einen in die Arbeitskammer mündenden Eintrittskanal, dessen zylindrische Kanalwände sich im Wesentlichen parallel zur Bewegungsrichtung erstrecken und/oder der koaxial zur Bewegungsmittelachse des Läufers angeordnet ist. Auf diese Weise ist ein größter Anteil der axialen Richtungskomponente für die Strömungsrichtung erreicht.

Bei der Erfindung umfasst der Druckluftzugang eine Aufnahme für einen Rückschlagkörper, wie eine Rückschlagkugel. Die Aufnahme kann stirnwandseitig ausgeführt sein und hat vorzugsweise einen einstückig mit der Stirnwand in die Arbeitskammer ragenden Hülsenvorsprung, wobei an dem Hülsenboden der Eintrittskanal ausgebildet ist. Der in die Arbeitskammer ragende Hülsenvorsprung begrenzt einen ringförmigen Freiraum in der Arbeitskammer, in dem bei Einnahme der proximalen Umkehrposition ein hülsenförmiger Dauermagnetträger des Läufers insbesondere kontaktlos eingreifen kann.

In der Aufnahme kann der Rückschlagkörper beweglich geführt sein. Die Aufnahme bildet einen Dichtungssitz insbesondere an dem aufnahmeseitigen Öffnungsrand des Eintrittskanals. Der Rückschlagkörper kann den Druckluftzugang hermetisch abschließend dichten, wenn der Rückschlagkörper an den Dichtungssitz anliegt. Sitzt der Rückschlagkörper an dem Dichtungssitz, befindet er sich in einer Dichtungsposition.

Vorzugsweise ist der Rückschlagkörper mittels Federvorspannung und/oder Magnetismus gegen den Dichtungssitz gedrückt. Der Rückschlagkörper kann sphärisch geformt sein.

Bei einer bevorzugten Ausführung der Erfindung ist der Rückschlagkörper aus ferromagnetischem Material gebildet, so dass der Dauermagnet des Läufers dem Rückschlagkörper eine magnetische Anziehungskraft mitteilt, die dem Rückschlagkörper gegen den Dichtungssitz drückt. Dabei nimmt die Anziehungskraft zu, wenn sich der Dauermagnet des Läufers dem Rückschlagkörper nähert. Alternativ und zusätzlich kann in der Aufnahme eine Druckfeder angeordnet sein, die den Rückschlagkörper gegen den Dichtungssitz drückt.

Vorzugsweise ist der Rückschlagkörper bei dessen Bewegung aus der und in die Dichtungsposition im Wesentlichen parallel zur Bewegungsrichtung des Läufers geführt. Die Führung ist derart ausgelegt, dass der Rückschlagkörper selbständig den Dichtungssitz findet, wenn er in die Dichtungsposition gezwungen ist.

Bei einer Weiterbildung der Erfindung ragt der Rückschlagkörper bei Einnahme der Dichtungsposition derart in die Arbeitskammer, dass der Läufer bei der Annäherung in die proximale Umkehrposition der Hin- und Herbewegung in Eingriff mit dem Rückschlagkörper gelangt, um diesen bis zum Erreichen der proximalen Umkehrposition mitzunehmen und aus der Dichtungsposition zu verdrängen. Kurz bevor der Läufer den Rückschlagkörper mitnimmt, herrschen die größten magnetischen Anziehungskräfte auf den Rückschlagkörper. Bei der Mitnahme des Rückschlagkörpers wird der Dichtungssitz von dem Rückschlagkörper freigegeben. Die Freigabeamplitude entspricht dem Weg des Läufers nach Kontaktaufnahme mit dem Rückschlagkörper bis zur endgültigen Umkehrposition. Durch Öffnung des Druckluftzugangs gelangt eine Druckluftströmung in die Arbeitskammer und trifft direkt auf die pneumatische Wirkfläche des Läufers, wodurch die Umkehrung der Bewegungsrichtung des Läufers eingeleitet wird.

Bei einer bevorzugten Ausführung der Erfindung hat der Energiewandler einen pneumatischen Taktgeber oder Druckminderer, der insbesondere benachbart der Aufnahme angeordnet ist. Der Taktgeber veranlasst eine getaktete pneumatische Beaufschlagung der Arbeitskammer, insbesondere der Aufnahme.

Des Weiteren kann das Feldgerät einen Anschluss für eine vorzugsweise konstante Pneumatikquelle aufweisen, an dem insbesondere sowohl der Druckminderer als auch ein I/P-Wandler angeschlossen sind. Der I/P-Wandler empfängt vorzugsweise ein elektrisches Stellungssignal von einem Prozessor des Feldgeräts oder einer übergeordneten Leitstelle der prozesstechnischen Anlage. Das elektrische Stellungssignal wird in dem I/P-Wandler in ein pneumatisches Stellsignal umgewandelt und an den Stellantrieb abgegeben. Der Prozessor des Feldgeräts kann vorzugsweise ausschließlich von dem Energiewandler des Feldgeräts elektrisch versorgt sein. Zudem kann das Feldgerät einen an den Energiewandler angeschlossenen elektrischen Speicher, wie einen Kondensator, aufweisen, in dem die in der Spule induzierte elektrische Energie zwischengespeichert wird.

Bei einer bevorzugten Ausführung der Erfindung hat der Läufer eine Außenform, die gemäß einer Spielpassung zu einer Innenkontur der Arbeitskammer und/oder der Rückstellkammer ausgebildet sein kann. Vorzugsweise hat der Läufer einen insbesondere hülsenförmigen Träger, an dem der Dauermagnet fest angebracht ist. Der Träger ist vorzugsweise aus einem nicht-magnetischen Material gefertigt. Es sei klar, dass der Läufer auch ausschließlich durch einen Dauermagneten gebildet sein kann.

Bei einer bevorzugten Ausführung der Erfindung ist die Innenkontur der Arbeits- und/oder Rückstellkammer von einer insbesondere zylindrischen Hülse gebildet, die insbesondere aus einem nicht-magnetischen Material gefertigt ist. Vorzugsweise ist die zylindrische Hülse der Innenkontur aus dem gleichen Material wie der nicht-magnetische Läufer gefertigt.

Weitere bevorzugte Ausgestaltungen sind in den Unteransprüchen angegeben.

Weitere Merkmale, Eigenschaften und Vorteile der Erfindung werden durch die folgende Beschreibung bevorzugter Ausführungen der Erfindung anhand der beiliegenden Zeichnungen deutlich, in denen zeigen:
- Figur 1: eine schematische Prinzipskizze eines erfindungsgemäßen Feldgeräts in Kooperation mit einem pneumatischen Stellantrieb einer prozesstechnischen Anlage;
- Figur 2a: eine schematische Querschnittsansicht eines Energiewandlers für ein erfindungsgemäßes Feldgerät bei einem druckluftfreien Betriebszustand;
- Figur 2b: eine schematische Querschnittsansicht des Energiewandlers nach Figur 2a in einem mit Druckluft beaufschlagten Betriebszustand;
- Figur 3a: eine schematische Querschnittsansicht eines Energiewandlers in der Ausführung des Feldgeräts nach Figur 1, wobei der druckluftfreie Betriebszustand dargestellt ist; und
- Figur 3b: eine schematische Querschnittsansicht des Energiewandlers nach Figur 3a in dem mit Druckluft beaufschlagten Betriebszustand.

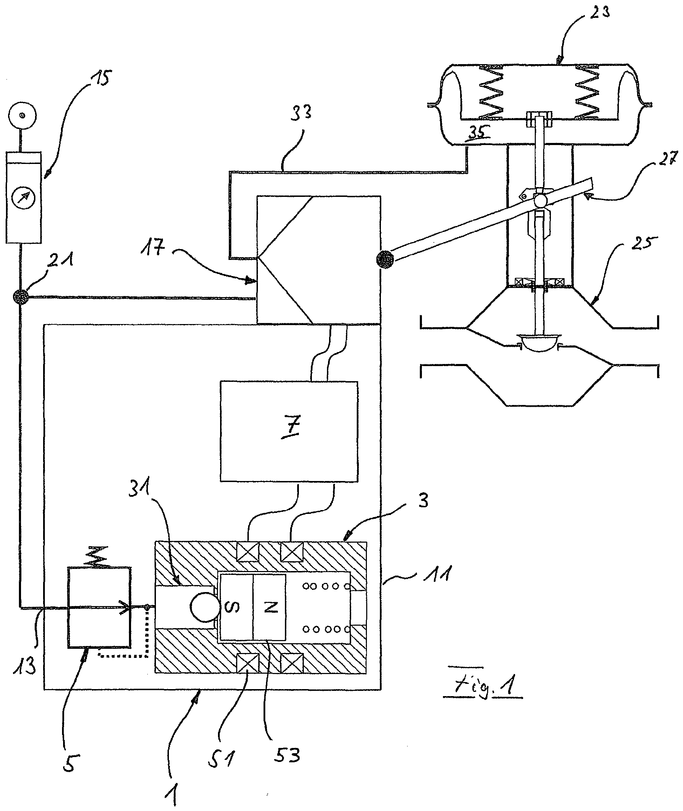

In Figur 1 ist das erfindungsgemäße elektropneumatische Feldgerät im Allgemeinen mit der Bezugsziffer 1 versehen und umfasst als Hauptbestandteile einen Energiewandler 3, einen pneumatischen Druckminderer 5 sowie ein Verbrauchersystem 7. Der Energiewandler 3, der pneumatische Druckminderer 5 sowie das Verbrauchersystem 7 sind in einem gemeinsamen Gehäuse 11 hermetisch abgedichtet untergebracht. Das Gehäuse 11 hat einen pneumatischen Anschluss 13, über den der pneumatische Druckminderer 5 an eine pneumatische Energiequelle 15 angeschlossen ist. Die pneumatische Energiequelle 15 stellt einen konstanten, aber einstellbaren pneumatischen Druck von beispielsweise 6 bar zur Verfügung. Der Druckminderer 5 hat die Aufgabe, einen Druckluftzugang 31 des Energiewandlers 3 entsprechend der Funktionsweise des Energiewandlers 3 zu be- und entlüften, um eine Hin- und Herbewegung eines Läufers 53 des Energiewandlers 3 zu veranlassen.

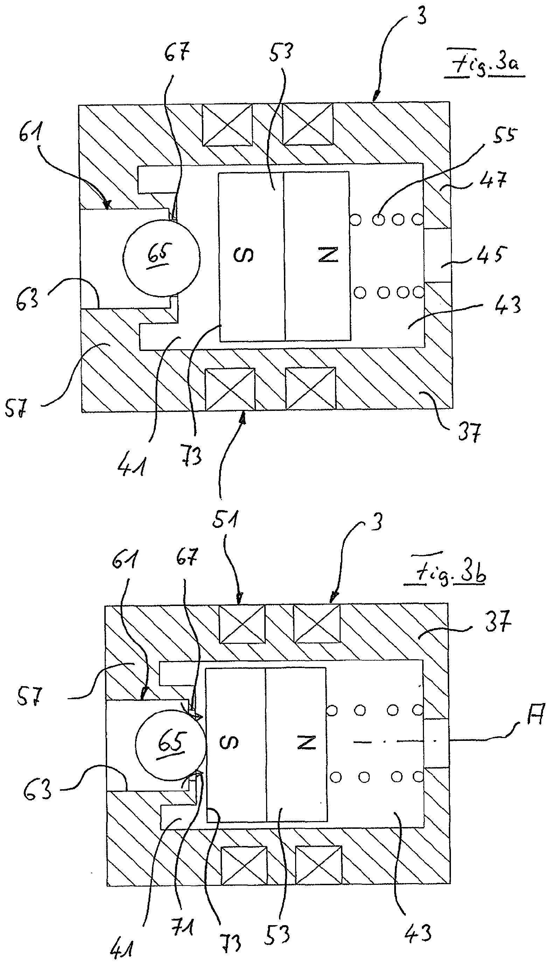

Die pneumatische Energiequelle 15 ist ebenfalls an einen elektropneumatischen Stellungsregler 17 über eine pneumatische Weiche 21 angeschlossen. Das Verbrauchersystem 7 kann entsprechend der Patentanmeldung DE 10 2010 054 878 A1 gemäß deren Ausführungen nach den Figuren 3 bis 5 realisiert sein. Beispielsweise kann die elektrische Energie des Energiewandlers 3 dazu genutzt werden, den Stellungsregler 17, einen Stellungssensor, etc. zu betreiben. Das Verbrauchersystem 7 ist mit dem Energiewandler 3 sowie mit dem Stellungsregler 17 elektrisch verbunden. Das Verbrauchersystem dient hauptsächlich dazu, die erzeugte elektrische Energie aufzubereiten und entweder zu speichern oder an einen Endverbraucher 17 abzugeben.

Der Stellungsregler 17 betätigt den pneumatischen Stellantrieb 23, der als Hubantrieb realisiert ist. Eine an einer beweglichen Plattenmembrananordnung befestigte Stangenanordnung ist mit einem Ventilglied eines Stellventils 25 gekoppelt, das einen nicht näher dargestellten Stoffstrom einer prozesstechnischen Anlage einstellt, insbesondere regelt. Ein Positionssensor 27 ist dazu ausgelegt, die Position des Stellventils 25 zu erfassen und als Signal an den Stellungsregler 17 weiterzuleiten.

Wie in Figur 1 dargestellt ist, kann das elektrische Verbrauchersystem 7 sowie auch der Stellungsregler 17 elektrische Energie von dem Energiewandler 3 erhalten. Der Stellungsregler 17 gibt ein pneumatisches Stellsignal über die Pneumatikleitung 33 an die pneumatische Antriebskammer 35 ab, wodurch die Stange des Stellantriebs 23 samt Ventilglied des Stellventils 25 angehoben werden kann.

Im Folgenden werden Details des Energiewandlers 3 anhand der Figuren 3a bis 3b und Figur 1 erläutert.

Der Energiewandler 3 hat ein nicht-magnetisches Gehäuse 37, das im Wesentlichen eine Zylinderform mit einem Innenraum aufweist, der eine Arbeitskammer 41 und eine Rückstellkammer 43 begrenzt. Die Rückstellkammer 43 hat eine Druckausgleichsöffnung 45 an einer dem Druckminderer 5 abgewandten Stirnseite 47 des Gehäuses 37, so dass bei einer Verkleinerung der Rückstellkammer 43 kein pneumatischer Überdruck in der Rückstellkammer 43 erzeugt wird.

In dem Gehäuse 37 ist eine Spule 51 angeordnet, in der die zu erzeugende elektrische Spannung induziert wird. Die Arbeitskammer 41 ist von der Rückstellkammer 43 durch einen beweglichen Läufer 53 getrennt, der in Axialrichtung A beweglich angeordnet, wobei magnetische Pole durch N und S angedeutet sind.

In der Rückstellkammer 43 befindet sich eine Rückstelldruckfeder 55, die den Läufer 53 in Axialrichtung A gegen die Stirnwand 57 drängt, die dem Druckminderer 5 benachbart ist.

An der Stirnwand 57 ist der Druckluftzugang 61 ausgebildet, der eine in das Gehäuse 37 versenkte Aufnahme 63 aufweist, in der eine bewegliche Rückschlagkugel 65 angeordnet ist. Die zylindrische Aufnahme 63 mündet in die Arbeitskammer 41 an einem Eintrittskanal 67, dessen zylindrischer Kanalwandverlauf sich im Wesentlichen in Axialrichtung A erstreckt. Der Eintrittskanal 67 hat einen der Rückschlagkugel 65 zugewandten Öffnungsrand, der einen Dichtungssitz bildet, den die Rückschlagkugel 65 belegt, um den Druckluftzugang 61 gegenüber der Arbeitskammer 41 zu verschließen, welcher Betriebszustand in Figur 3a dargestellt ist.

Der Läufer 53 kann in Axialrichtung A zwischen zwei Umkehrpositionen (distal und proximal im Hinblick auf die Aufnahme 63) hin und her bewegt werden. Da sich die Rückschlagkugel 65 über den Eintrittskanal 67 hinaus in die Arbeitskammer 41 erstreckt, kommt der Läufer 53 bei Erreichen seiner proximalen Umkehrposition, die annähernd in Figur 3b dargestellt ist, in Eingriff mit der Rückschlagkugel 65 und drückt diese von dem Dichtungssitz weg, so dass ein pneumatischer Druckluftimpuls, der durch die Pfeile 71 angedeutet sein soll, in die Arbeitskammer 41 gelangen kann. Der Druckluftimpuls 71 ist dabei derart gerichtet, dass er den Eintrittskanal 67 mit einer überwiegenden Richtungskomponente verlässt, die im Wesentlichen parallel zur Bewegungsrichtung (Axialrichtung A) des Läufers 53 ist und auf eine Wirkfläche 73 des Läufers 53 zu gerichtet ist.

Aufgrund des Druckluftimpulses 71 wird die Bewegungsrichtung des Läufers 53 umgekehrt, und dieser entfernt sich in Axialrichtung A von dem Druckluftzugang 61 weg, wodurch die Rückschlagkugel 65 den Dichtungssitz wieder abdichtend belegt.

Die Rückschlagkugel 65 ist aus einem ferromagnetischen Material, so dass magnetische Anziehungskräfte von dem Läufer 53 auf die Rückschlagkugel 65 wirken. Sobald der Kontakt zwischen der Rückschlagkugel und dem Läufer 53 besteht, wird die Rückschlagkugel 65 von dem Dichtungssitz weg mitgenommen und bei der Zurückbewegung des Läufers 53 wieder hin zum Dichtungssitz zurück geleitet. Dabei haftet die Rückschlagkugel an dem dauermagnetischen Läufer 53.

Sobald der Druckluftzugang 61 durch Belegung des Dichtungssitzes geschlossen ist, wirkt die Rückstellfeder 55, um die Bewegung des Läufers 53 erneut umzukehren.

Aufgrund der dadurch initiierten und veranlassten axialen Hin- und Herbewegung des Läufers 53 wird in der Spule 51 die gewünschte elektrische Spannung induziert, die an das Verbrauchersystem 7 weitergegeben wird.

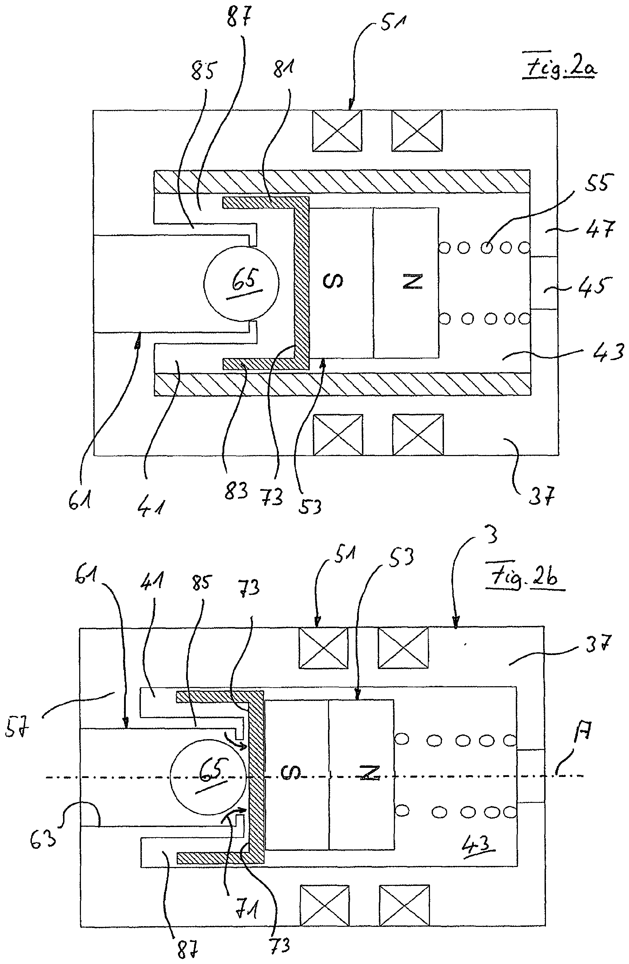

In den Figuren 2a und 2b ist eine weitere Ausführung eines Energiewandlers 3 dargestellt, wobei zur besseren Lesbarkeit der Figurenbeschreibung identische Bezugsziffern für gleiche oder identische Bauteile des Energiewandlers 3 nach Figur 3a und 3b herangezogen sind.

Der Energiewandler 3 gemäß den Figuren 2a und 2b unterscheidet sich von dem Energiewandler 3 nach den Figuren 3a und 3b dadurch, dass der Läufer 53 neben dem Dauermagneten zusätzlich eine Traghülse 81 aus nicht-magnetischem Material aufweist. An der Traghülse 81 ist der Dauermagnet befestigt. Die Traghülse 81 umfasst einen umlaufenden Axialschenkel 83, dessen zylindrische Außenseite an die Zylinderform der Arbeitskammer 41 bzw. der Rückstellkammer 43 angepasst ist. Die Traghülse 81 bewirkt eine geführte Verlagerbarkeit des dauermagnetischen Läufers 53 längs der Axialrichtung A.

Eine Stirnseite 73 der Traghülse 81 kommt in Eingriff mit der Rückschlagkugel 65, um diese aus und von dem Dichtungssitz weg zu verdrängen. Auf die Rückschlagkugel 65 wirken magnetische Anziehungskräfte, weil die Traghülse 81 aus nicht- magnetischem Material gefertigt ist.

Die Traghülse 81 bietet den Vorteil einer vereinfachten Herstellbarkeit der Spielpassung zwischen der zylindrischen Innenseite der Kammern und des Läufers 53.

Im Unterschied zu der Ausführung nach den Figuren 3a und 3b ist die Aufnahme 63 mit einem größeren zylindrischen Wandfortsatz 85 ausgebildet, der weiter in die Arbeitskammer 41 hineinragt, wodurch ein ringförmiger Innenraum 87 gebildet ist, in der der umlaufende Axialringschenkel 83 der Traghülse 81 eingreifen kann, wenn der Läufer 53 in der proximalen Umkehrposition ist, die in Figur 2 dargestellt ist.

Befindet sich der Läufer 53 in der proximalen Umkehrposition, drückt dieser die Rückschlagkugel 65 von dem Dichtungssitz weg, wodurch der Druckimpuls 71 in die Arbeitskammer gegen die Wirkfläche an der Stirnseite 73 der Traghülse 81 gelangen kann.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elektropneumatisches Feldgerät
- 3: Energiewandler
- 5: pneumatischer Druckminderer
- 7: Verbrauchersystem
- 11: Gehäuse
- 13: pneumatischer Anschluss
- 15: pneumatische Energiequelle
- 17: elektropneumatischer Stellungsregler
- 21: pneumatische Weiche
- 23: pneumatischer Stellantrieb
- 25: Stellventil
- 27: Positionssensor
- 31: Druckluftzugang
- 33: Pneumatikleitung
- 35: pneumatische Arbeitskammer
- 37: Gehäuse
- 41: Arbeitskammer
- 43: Rückstellkammer
- 45: Druckausgleichsöffnung
- 47: Stirnseite
- 51: Spule
- 53: Läufer
- 57: Stirnwand
- 61: Druckluftzugang
- 63: Aufnahme
- 65: Rückschlagkugel
- 67: Eintrittskanal
- 71: Druckluftimpuls
- 73: Stirnseite
- 81: Traghülse
- 83: Axialringschenkel
- 85: Wandfortsatz
- 87: Innenraum

- A: Axialrichtung
- N, S: Pole

## Patentansprüche

1. Elektropneumatisches Feldgerät (1), wie elektropneumatischer Umformer oder elektropneumatischer Stellungsregler (17), zum Ansteuern eines pneumatischen Stellantriebs (23), umfassend einen Energiewandler (3), der pneumatische Energie insbesondere einer pneumatischen Energiequelle (15) des Stellantriebs (23) in elektrische Energie umwandelt und eine Arbeitskammer (41) mit einem pneumatischen Druckluftzugang (61), über den ein Druckluftimpuls in die Arbeitskammer (41) einleitbar ist, eine Rückstellkammer (43), eine Spule (51) und einen die Arbeitskammer (41) und die Rückstellkammer (43) trennenden Läufer (53) aufweist, der für eine translatorische Hin- und Herbewegung bei entsprechender Vergrößerung bzw. Verkleinerung der Arbeitskammer (41) bzw. der Rückstellkammer (43) geführt ist und mit oder als ein Dauermagnet ausgebildet ist, so dass bei der Hin- und Herbewegung elektrische Energie in der Spule (51) induziert wird, wobei der pneumatische Druckluftzugang (61) derart ausgestaltet ist, dass der den Druckluftzugang (61) verlassende Druckluftimpuls die Arbeitskammer (41) mit einer Richtungskomponente erreicht, die parallel zur translatorischen Bewegungsrichtung des Läufers (53) ist, **dadurch gekennzeichnet, dass** der Druckluftzugang eine Aufnahme für einen Rückschlagkörper, wie eine Rückschlagkugel (65), aufweist, in der der Rückschlagkörper beweglich geführt ist, wobei die Aufnahme einen Dichtungssitz bildet, in dem der Rückschlagkörper den Druckluftzugang (61) hermetisch abschließend dichtend sitzen kann, wenn er in einer Dichtungsposition liegt.

2. Elektropneumatisches Feldgerät (1) nach Anspruch 1, **dadurch gekennzeichnet, dass** ein Anteil der mit der axialen Bewegungsrichtung zusammenfallenden Richtungskomponente der Einströmrichtung des Druckluftimpuls im Vergleich zu der jeweiligen weiteren radialen Richtungskomponente der Einströmrichtung größer als 20% ist, vorzugsweise überwiegt.

3. Elektropneumatisches Feldgerät (1) nach Anspruch 1 oder 2, **dadurch gekennzeichnet, dass** der Läufer (53) im Wesentlichen eine in Bewegungsrichtung erstreckende axiale, insbesondere zylindrische Führungsaußenseite, die für die geführte Hin- und Herbewegung mit einer insbesondere zylindrische Führungsinnenseite zusammenwirkt, und wenigstens eine axiale Stirnseite (73) aufweist, die dem Druckluftzugang (61) zugewandt ist und auf die der Druckimpuls (71) nach Eintritt in die Arbeitskammer (41) trifft.

4. Elektropneumatisches Feldgerät (1) nach einem der vorstehenden Ansprüche, **dadurch gekennzeichnet, dass** die Arbeitskammer (41) eine insbesondere zylindrische Längswand, längs der der Läufer (53) bei dessen Hin- und Herbewegung entlang gleitet, und eine quer, insbesondere senkrecht, zur Bewegungsrichtung verlaufende Stirnwand aufweist, wobei die Längswand zumindest längs des Gleitwegs des Läufers (53) frei des Druckluftzugangs (61) ausgeführt ist und/oder der Druckluftzugang (61) in der Stirnwand eingebracht ist.

5. Elektropneumatisches Feldgerät (1) nach einem der vorstehenden Ansprüche, **dadurch gekennzeichnet, dass** der Druckluftzugang (61) einen in die Arbeitskammer (41) mündenden Eintrittskanal (67) aufweist, dessen insbesondere zylindrische Kanalwände sich im wesentlichen parallel zur Bewegungsrichtung erstrecken und/oder der koaxial zur Bewegungsmittelachse des Läufers (53) angeordnet ist.

6. Elektropneumatisches Feldgerät (1) nach einem der vorstehenden Ansprüche, **dadurch gekennzeichnet, dass** der Rückschlagkörper mittels Federvorspannung und/oder Magnetismus gegen den Dichtungssitz gedrückt ist und insbesondere sphärisch ist.

7. Elektropneumatisches Feldgerät (1) nach einem der vorstehenden Ansprüche, **dadurch gekennzeichnet, dass** der Rückschlagkörper aus ferromagnetischem Material gebildet ist, so dass der Dauermagnet des Läufers (53) dem Rückschlagkörper eine magnetische Anziehungskraft mitteilt, die den Rückschlagkörper gegen den Dichtungssitz drückt, und/oder dass in der Aufnahme eine Druckfeder angeordnet ist, die den Rückschlagkörper gegen den Dichtungssitz drückt.

8. Elektropneumatisches Feldgerät (1) nach einem der vorstehenden Ansprüche, **dadurch gekennzeichnet, dass** der Rückschlagkörper bei dessen Bewegung aus der Dichtungsposition und in die Dichtungsposition im Wesentlichen parallel zur Bewegungsrichtung des Läufers (53) geführt ist.

9. Elektropneumatisches Feldgerät (1) nach einem der vorstehenden Ansprüche, **dadurch gekennzeichnet, dass** der Rückschlagkörper bei Einnahme der Dichtungsposition derart in die Arbeitskammer (41) vorsteht, dass der Läufer (53) bei der Annäherung einer dem Rückschlagkörper zugewandten Umkehrposition der Hin- und Herbewegung in Eingriff mit dem Rückschlagkörper gelangt und diesen aus der Dichtungsposition verdrängt, um den Dichtungssitz von dem Rückschlagkörper freizugeben.

10. Elektropneumatisches Feldgerät (1) nach einem der vorstehenden Ansprüche, **dadurch gekennzeichnet, dass** der Energiewandler (3) einen pneumatischen Druckminderer aufweist, der eine getaktete pneumatische Beaufschlagung der Arbeitskammer (41), insbesondere der Aufnahme, veranlasst, wobei insbesondere das Feldgerät (1) einen Anschluss für eine vorzugsweise konstante Pneumatikquelle aufweist, an dem insbesondere sowohl der Druckminderer als auch ein i/p-Wandler angeschlossen sind, der vorzugsweise ein elektrisches Stellungssignal von einem Prozessor des Feldgeräts (1) empfängt, um dieses in ein pneumatisches Stellsignal umzuwandeln und an den Stellantrieb (23) abzugeben, wobei insbesondere der Prozessor insbesondere ausschließlich von dem Energiewandler (3) elektrisch versorgt ist und insbesondere einen elektrischen Speicher, wie einen Kondensator, zum Speichern der in der Spule (51) induzierten elektrischen Energie aufweist.

11. Elektropneumatisches Feldgerät (1) nach einem der vorstehenden Ansprüche, **dadurch gekennzeichnet, dass** der Läufer (53) eine Außenförm aufweist, die gemäß einer Spielpassung zu einer Innenkontur der Arbeitskammer (41) und/oder der Rückstellkammer (43) ausgebildet ist, und/oder einen insbesondere hülsenförmigen Träger für den Dauermagneten aufweist, welcher Träger insbesondere aus einem nicht-magnetischen Material gefertigt ist.

12. Elektropneumatisches Feldgerät (1) gemäß einem der vorstehenden Ansprüche, **dadurch gekennzeichnet, dass** eine Innenkontur der Arbeits- und/oder Rückstellkammer (43) von einer insbesondere zylindrischen Hülse gebildet ist, die insbesondere aus einem nicht-magnetischen Material, vorzugsweise aus dem gleichen Material wie der nicht-magnetische Läufer (53), gefertigt ist.

## Claims

1. An electro-pneumatic field appliance (1), such as an electro-pneumatic converter or an electro-pneumatic position regulator (17), for purposes of activating a pneumatic actuator (23), comprising an energy converter (3), which converts pneumatic energy, in particular from a pneumatic energy source (15) of the actuator (23), into electrical energy, and an operating chamber (41) with a pneumatic compressed air access port (61), by way of which a compressed air pulse can be introduced into the operating chamber (41), has a resetting chamber (43), a coil (51), and an armature (53) separating the operating chamber (41) from the resetting chamber (43), which is guided in a translatory reciprocal movement with a corresponding increase or reduction in size of the operating chamber (41) and the resetting chamber (43) respectively, and is designed with or as a permanent magnet, such that in the course of the reciprocal movement electrical energy is induced in the coil (51), wherein
the pneumatic compressed air access port (61) is configured such that the compressed air pulse exiting from the compressed air access port (61) arrives in the operating chamber (41) with a directional component that is parallel to the translatory direction of movement of the armature (53),
**characterised in that**,
the compressed air access port has a seating for a check valve element, such as a check valve sphere (65), in which the check valve element is movably guided, wherein the seating forms a sealing seat, on which the check valve element can sit so as to close off the compressed air access port (61) hermetically in a sealing manner, if it is located in a sealing position.

2. The electro-pneumatic field appliance (1) in accordance with claim 1,
**characterised in that**,
a proportion of the directional component of the inflow direction of the compressed air pulse coinciding with the axial direction of movement is greater than 20% compared with the respective other radial directional component of the inflow direction, and preferably predominates the latter.

3. The electro-pneumatic field appliance (1) in accordance with claim 1 or 2,
**characterised in that**,
the armature (53) has a guiding outer surface, in particular a cylindrical guiding outer surface, extending essentially axially in the direction of movement, which for the guided reciprocal movement interacts with an in particular cylindrical inner surface, and has at least one axial end face (73), which faces towards the compressed air access port (61), and on which the pressure pulse (71) impinges after entry into the operating chamber (41).

4. The electro-pneumatic field appliance (1) in accordance with one of the preceding claims,
**characterised in that**,
the operating chamber (41 has an in particular cylindrical longitudinal wall, along which the armature (53) slides during its reciprocal movement, and has an end wall running transversely, in particular at right angles to the direction of movement, wherein the longitudinal wall, at least along the sliding path of the armature (53), is embodied free of the compressed air access port (61), and/or the compressed air access port (61) is incorporated in the end wall.

5. The electro-pneumatic field appliance (1) in accordance with one of the preceding claims,
**characterised in that**,
the compressed air access port (61) has an entry passage (67) opening out into the operating chamber (41), whose in particular cylindrical passage walls extend essentially parallel to the direction of movement, and/or is arranged coaxially with respect to the central axis of movement of the armature (53).

6. The electro-pneumatic field appliance (1) in accordance with one of the preceding claims,
**characterised in that**,
the check valve element is pressed by means of a spring preload and/or magnetism against the sealing seat, and in particular is spherical.

7. The electro-pneumatic field appliance (1) in accordance with one of the preceding claims,
**characterised in that**,
the check valve element is formed from a ferromagnetic material, such that the permanent magnet of the armature (53) exerts a magnetic force of attraction onto the check valve element, which presses the check valve element against the sealing seat, and/or **in that** a compression spring is arranged in the seating, which presses the check valve element against the sealing seat.

8. The electro-pneumatic field appliance (1) in accordance with one of the preceding claims,
**characterised in that**,
in the course of its movement out of and into the sealing position the check valve element is guided essentially parallel to the direction of movement of the armature (53).

9. The electro-pneumatic field appliance (1) in accordance with one of the preceding claims,
**characterised in that**,
on assuming the sealing position the check valve element protrudes into the operating chamber (41), such that the armature (53), when approaching a reversal position of the reciprocal movement facing towards the check valve element, engages with the check valve element, and forces the latter out of the sealing position, so as to release the sealing seat from the check valve element.

10. The electro-pneumatic field appliance (1) in accordance with one of the preceding claims,
**characterised in that**,
the energy converter (3) has a pneumatic pressure reduction device, which initiates a cyclic application of pneumatic force onto the operating chamber (41), in particular onto the seating, wherein
in particular the field appliance (1) has a port for a preferably constant pneumatic source, on which in particular both the pressure reduction device and also an i/p-converter are connected, which preferably receives an electrical positioning signal from a processor of the field appliance (1), so as to convert the latter into a pneumatic positioning signal, and to output the latter to the actuator (23), wherein
in particular the processor is electrically supplied, in particular exclusively, from the energy converter (3), and in particular has an electrical store, such as a capacitor, for purposes of storing the electrical energy induced in the coil (51).

11. The electro-pneumatic field appliance (1) in accordance with one of the preceding claims,
**characterised in that**,
the armature (53) has an outer shape, which is designed with a clearance fit relative to an inner contour of the operating chamber (41) and/or of the resetting chamber (43), and/or has an in particular sleeve-shaped carrier for the permanent magnets, which carrier in particular is produced from a non-magnetic material.

12. The electro-pneumatic field appliance (1) in accordance with one of the preceding claims,
**characterised in that**,
an inner contour of the operating chamber and/or the resetting chamber (43) is formed from an in particular cylindrical sleeve, which in particular is produced from a non-magnetic material, preferably from the same material as the non-magnetic armature (53).

## Revendications

1. Appareil de terrain électropneumatique (1), comme un convertisseur de puissance électropneumatique ou un régulateur de position électropneumatique (17), pour commander un servomoteur pneumatique (23), comprenant un convertisseur d'énergie (3), qui convertit l'énergie pneumatique notamment une source d'énergie pneumatique (15) du servomoteur (23) en énergie électrique et présente une chambre de travail (41) avec un raccord d'entrée d'air pressurisé pneumatique (61), par l'intermédiaire duquel une impulsion d'air pressurisé peut être introduite dans la chambre de travail (41), une chambre de réinitialisation (43), une bobine (51) et un rotor (53) séparant la chambre de travail (41) et la chambre de réinitialisation (43), qui est guidé pour un mouvement de translation d'avant en arrière lors d'un agrandissement resp. d'une diminution correspondants de la chambre de travail (41), respectivement de la chambre de réinitialisation (43) et est configuré avec ou comme un aimant permanent, de sorte que lors du mouvement d'avant en arrière de l'énergie électrique soit induite dans la bobine (51), dans lequel le raccord d'entrée d'air pressurisé (61) pneumatique est configuré de telle sorte que l'impulsion d'air pressurisé dans le raccord d'entrée d'air pressurisé (61) atteigne la chambre de travail (41) avec un composant de direction, qui est parallèle à la direction du mouvement de translation du rotor (53), **caractérisé en ce que** le raccord d'entrée d'air pressurisé présente un réceptacle pour un corps antiretour, comme une bille antiretour (65), dans lequel le corps anti retour est guidé de manière mobile, dans lequel le réceptacle forme un siège de joint d'étanchéité dans lequel le corps antiretour peut asseoir le raccord d'entrée d'air pressurisé (61) de manière hermétiquement étanche isolante, lorsqu'il se trouve dans une position de joint d'étanchéité.

2. Appareil de terrain électropneumatique (1) selon la revendication 1, **caractérisé en ce que** une fraction des composants de directions coïncidant avec la direction de mouvement axial de la direction de circulation de l'impulsion d'air pressurisé est plus grande que 20 % comparé aux composants de directions radiaux supplémentaires respectifs de la direction de circulation, de préférence prédomine.

3. Appareil de terrain électropneumatique (1) selon la revendication 1 ou 2, **caractérisé en ce que** le rotor (53) présente essentiellement un côté extérieur de guidage notamment cylindrique, s'étendant axialement dans la direction de mouvement, qui coopère pour le mouvement guidé d'avant en arrière avec un côté intérieur de guidage notamment cylindrique, et au moins un côté frontal axial (73), qui est tourné vers le raccord d'entrée d'air pressurisé (61) et sur lequel l'impulsion de pression (71) bute après l'entrée dans la chambre de travail (41).

4. Appareil de terrain électropneumatique (1) selon une des revendications précédentes, **caractérisé en ce que** la chambre de travail (41) présente une paroi longitudinale notamment cylindrique, le long de laquelle le rotor (53) glisse lors de son mouvement d'avant en arrière et une paroi frontale s'étendant transversalement, notamment perpendiculairement à la direction de mouvement, dans lequel la paroi longitudinale est réalisée au moins le long du trajet de glissement du rotor (53)en étant dépourvue du raccord d'entrée d'air pressurisé et/le raccord d'entrée d'air pressurisé (61) est ménagé dans la paroi frontale.

5. Appareil de terrain électropneumatique (1) selon une des revendications précédentes, **caractérisé en ce que** le raccord d'entrée d'air pressurisé (61) présente un canal d'entrée (67) débouchant dans la chambre de travail (41) dont des parois de canaux notamment cylindriques s'étendent essentiellement parallèlement à la direction de mouvement et/qui est disposé coaxialement à l'axe central de mouvement du rotor (53).

6. Appareil de terrain électropneumatique (1) selon une des revendications précédentes, **caractérisé en ce que** le corps antiretour est pressé au moyen d'une précontrainte élastique et/ou du magnétisme contre le siège de joint d'étanchéité et est notamment sphérique.

7. Appareil de terrain électropneumatique (1) selon une des revendications précédentes, **caractérisé en ce que** le corps antiretour est formé en matériau ferromagnétique, de sorte que l'aimant permanent du rotor (53) communique au corps antiretour une force d'attraction magnétique, qui presse le corps antiretour contre le siège de joint d'étanchéité et/ou **en ce que** un ressort de pression est disposé dans le réceptacle, qui presse le corps antiretour contre le siège de joint d'étanchéité.

8. Appareil de terrain électropneumatique (1) selon une des revendications précédentes, **caractérisé en ce que** le corps antiretour est guidé lors de son mouvement hors de la position de joint d'étanchéité et dans la position de joint d'étanchéité essentiellement parallèlement à la direction de mouvement du rotor (53).

9. Appareil de terrain électropneumatique (1) selon une des revendications précédentes, **caractérisé en ce que** le corps antiretour lorsqu'il adopte la position de joint d'étanchéité dépasse en saillie dans la chambre de travail (41), de telle sorte que le rotor (53)lorsqu'il se rapproche d'une position d'inversion tournée vers le corps antiretour du mouvement d'avant en prise se retrouve en prise avec le corps antiretour et refoule celui-ci hors de la position de joint d'étanchéité, afin de débloquer l'assise de joint d'étanchéité du corps antiretour.

10. Appareil de terrain électropneumatique (1) selon une des revendications précédentes, **caractérisé en ce que** le convertisseur d'énergie (3) présente un réducteur de pression pneumatique, qui provoque une sollicitation pneumatique synchronisée de la chambre de travail (41), notamment du réceptacle, dans lequel notamment l'appareil de terrain (1) présente un raccord pour une source pneumatique de préférence constante, à laquelle tant le réducteur de pression qu'un convertisseur i/p sont raccordés, qui reçoit de préférence un signal de position électrique provenant d'un processeur de l'appareil de travail (1), afin de convertir celui-ci en un signal de réglage pneumatique et l'émettre vers le servomoteur (23), dans lequel notamment le processeur est alimenté électriquement notamment à l'exclusion du convertisseur d'énergie (3) et notamment un accumulateur électrique, comme un condensateur, pour accumuler l'énergie électrique induite dans la bobine (51).

11. Appareil de terrain électropneumatique (1) selon une des revendications précédentes, **caractérisé en ce que** le rotor (53) présente une forme extérieure, qui est conçue conformément à un ajustement avec jeu par rapport à un contour intérieur de la chambre de travail (41) et/ou constitue la chambre de réinitialisation (43), et/ou un support notamment en forme de douille pour les aimants permanents, lequel support est fabriqué notamment dans un matériau non magnétique.

12. Appareil de terrain électropneumatique (1) selon une des revendications précédentes, **caractérisé en ce que** un contour intérieur de la chambre de travail et/ou réinitialisation (43) est formé par une douille notamment cylindrique, qui est fabriquée notamment dans un matériau non magnétique, de préférence dans le même matériau que le rotor (53) non magnétique.
